# EUROPÄISCHE PATENTSCHRIFT

(11) **EP 1 079 452 B1**
(45) Veröffentlichungstag und Bekanntmachung des Hinweises auf die Patenterteilung: **02.11.2006**
(21) Anmeldenummer: 00116384.9
(22) Anmeldetag: 28.07.2000
(51) Int. Cl.: H01M 4/92, B01J 21/18, B01J 23/42

(54) **Elektrokatalysator für Brennstoffzellen**
Electrocatalyst for fuel cell
Electrocatalyseur pour cellule à combustible

(30) Priorität: 27.08.1999 EP 99116926
(43) Veröffentlichungstag der Anmeldung: 28.02.2001
(73) Patentinhaber: Umicore AG & Co. KG, 63457 Hanau-Wolfgang (DE)
(72) Erfinder: Auer, Emmanuel, Dr., 60528 Frankfurt (DE); Behl, Walter, 63825 Blanckenbach (DE); Albers, Peter, Dr., 63454 Hanau (DE); Vogel, Karl, Dr., 63755 Alzenau-Michelbach (DE); Vogler, Conny, Dr., 53332 Bornheim/Sechtem (DE)
(74) Vertreter: Stellbrink, Axel

(56) Entgegenhaltungen:
- EP-A- 0 827 225
- EP-A- 0 872 906

## Beschreibung

Die vorliegende Erfindung betrifft einen Elektrokatalysator und ein Verfahren zu dessen Herstellung und seine Verwendung in Brennstoffzellen.

Als Elektrokatalysatoren werden Platin- und legierte Platinkatalysatoren auf elektrisch leitfähigen Kohlenstoffträgern für Anoden und/oder Kathoden in Niedertemperatur-Brennstoffzellen, bevorzugt in phosphorsauren Brennstoffzellen (Phosphoric Acid Fuel Cell, PAFC), Polymer-Electrolyt-Membranzellen (Polymer Electrolyte Membrane Fuel Cell, PEMFC) und Direkt-Methanol-Brennstoffzellen (Direct Methanol Fuel Cell, DMFC) eingesetzt. Als typische Brennstoffe kommen auf der Kathodenseite Sauerstoff beziehungsweise Luft und auf der Anodenseite Wasserstoff, Kohlenwasserstoffe, wie z. B. Methan, sauerstoffhaltige Kohlenwasserstoffe, wie z. B. Alkohole, oder deren Reformate zum Einsatz. Die Platinbeladung liegt im Bereich von 5 - 80 Gew.-%, vorzugsweise im Bereich von 10 - 50 Gew.-% bezogen auf das Gesamtgewicht des Katalysators. In Abhängigkeit von der Elektrodenseite werden als elektrisch leitfähige Kohlenstoffträger insbesondere Ruße, graphitierte Ruße, Graphit, Karbide und deren physikalischen Mischungen verwendet.

Es ist bekannt, daß die erzielte elektrische Leistung einer Niedertemperaturbrennstoffzelle (z. B. PAFC, PEM FC, DMFC) im wesentlichen von der Aktivität des Kathoden-Katalysators für die Sauerstoff-Reduktions-Reaktion (ORR = oxygen reduction reaction) und der Reformat- beziehungsweise CO-Toleranz des Anoden-Katalysators abhängt. Eine maximale Stromdichte bei gegebener Spannung sowie ein nur sehr geringer Spannungsabfall während der Betriebszeit des Brennstoffzellenkatalysators sind deshalb besonders erstrebenswert. Dies führt zu einem optimalen Wirkungsgrad der Brennstoffzellen und zu sinkenden Kosten pro erzeugter Stromeinheit.

Als geeignete Katalysatoren mit guten Leistungsdaten haben sich Platin- oder bi- und multimetallische Platinkatalysatoren auf elektrisch leitfähigen Trägermaterialien wie z. B. Rußen oder graphitierten Rußen erwiesen. Als Standardträgermaterialien sind in der (Patent-)Literatur hauptsächlich Furnace-Ruße, wie z. B. Vulcan XC-72 der Firma Cabot Inc. (Massachusetts), oder Acetylen-Ruße, wie z. B. Shawinigan Black der Firma Chevron Chemicals (Houston, Texas), beschrieben.

So beschreibt die US 5 759 944 die Verwendung von Vulcan XC-72 und Shawinigan Black als Träger für Pt, Pt-Ni und Pt-Ni-Au Katalysatoren für Brennstoffzellen. Die Abscheidung der Metalle geschieht durch Suspendierung des Trägermaterials in Wasser, anschließende Hydrolyse, beziehungsweise Fällung des entsprechenden Edelmetall- und der Nichtedelmetallsalze sowie Reduktion mit einem wässrigen Reduktionsmittel (z. B. Formaldehyd). Nach Filtration und Trocknung des Katalysators kann sich eine thermische Behandlung in inerter oder reduzierender Atmosphäre anschließen.

US 5 068 161 beschreibt die Herstellung in analoger Weise von Pt, Pt-Co-Cr und Pt-Mn Kathoden-Katalysatoren auf Vulcan XC-72 und Shawinigan Black.

Die Herstellung von Anoden-Katalysatoren wird in EP 838 872 A2 in Form bi- oder multimetallischer Pt, Pt-Ru, Pt-Co-Mo und Pt-Ru-WO₃ Katalysatoren beschrieben. Ziel der Modifizierung des Platinkatalysators mit Elementen oder Verbindungen wie Ru, Mo oder WO₃ ist die Verbesserung der CO-Toleranz auf der Anodenseite der PEM-Brennstoffzelle. Als Standard-Trägermaterial wird Vulcan XC-72 eingesetzt, die Modifizierung des Platinkatalysators mit Elementen / Verbindungen wie Mo oder WO₃ ist als zweistufiger Prozeß beschrieben.

In EP 0827 225 A2 wird die Synthese geträgerter Elektrokatalysatoren auf Basis von Platin oder Platinlegierungen beschrieben, wobei die Abscheidung der Legierungsmetalle in Form eines zweistufigen Prozesses geschieht. Der als Vorläufer ("precursor") für die Unedelmetallmodifizierung dienende Platinkatalysator wird durch Fällung von H₂Pt(OH)₆ auf den Rußträgern Vulcan XC-72 und Shawinigan Black hergestellt.

Die Verwendung von Acetylenrußen als Standardträger zur Herstellung von Platin-Legierungskatalysatoren für die Kathode und Anode ist in US 5 593 934 und EP 557 673 genannt. In beiden Anmeldungen wird die Synthese des Platin-Katalysators aus Hexachloroplatin (IV) säure unter Verwendung von Natriumdithionit als mildem Reduktionsmittel beschrieben.

Alle diese bekannten Platin- oder Platinlegierungskatalysatoren haben den Nachteil, daß ihre elektrochemische Leistung beim Einsatz in der Brennstoffzelle limitiert ist.

Aufgabe der vorliegenden Erfindung ist es, einen Elektrokatalysator herzustellen, der aktiver ist als bekannte Katalysatoren.

Gegenstand der Erfindung ist ein Elektrokatalysator, der als Kohlenstoffträger einen Ruß mit einem H-Gehalt von > 4200 ppm, bevorzugt > 4400 ppm, bestimmt durch CHN-Analytik, und als katalytisch aktive Komponente Platin oder bi- beziehungsweise multimetallisch dotiertes oder legiertes Platin enthält.

Bi- beziehungsweise multimetallisch dotiertes oder legiertes Platin können durch Dotierungen des Platins beziehungsweise Legierungen von Platin mit den Elementen Ru, Sn, W, Mo, Fe, V, Mn, Co, Cr, Ni, Pd, Rh, Ir oder Kombinationen davon erhalten werden.

Das Verhältnis von CTAB-Oberfläche (Cetylammoniumbromid) zu BET-Oberfläche kann 0,9 - 1,1 betragen.

Ein CTAB/BET-Oberflächenverhältnis des Rußes von nahe 1 erlaubt außerdem die hochdisperse Abscheidung aktiver Metallkomponenten auf dem Träger, ohne daß Edelmetallkristallite in den Poren des Rußträgers eindringen und ihre spezifische Metalloberfläche elektrochemisch nicht mehr zugänglich ist.

Als Ruß mit einem H-Gehalt von größer 4200 ppm, bestimmt durch CHN-Analytik, kann ein Ruß mit einem H-Gehalt von größer 4200 ppm und einem Peakintegralverhältnis, bestimmt durch inelastische Neutronenstreuung (INS), von nicht-konjugierten H-Atomen (1250-2000 cm⁻¹) zu aromatischen und graphitischen H-Atomen (1000-1250 cm⁻¹ und 750-1000 cm⁻¹) von kleiner 1,22, vorzugsweise kleiner 1,20, eingesetzt werden. Die Herstellung des Furnacerußes erfolgt in einem Rußreaktor, welcher längs der Reaktorachse eine Verbrennungszone, eine Reaktionszone und eine Abbruchzone enthält, durch Erzeugen eines Stromes heißen Abgases in der Verbrennungszone durch vollständiges Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Rußbildung in der Abbruchzone durch Einsprühen von Wasser, wobei ein flüssiger und gasförmiger Rußrohstoff an derselben Stelle eingedüst werden.

Der flüssige Rußrohstoff kann durch Druck, Dampf, Preßluft oder den gasförmigen Rußrohstoff zerstäubt werden.

Flüssige Kohlenwasserstoffe verbrennen langsamer als gasförmige, da sie zuerst in die Gasform überführt, das heißt verdampft werden müssen. Hierdurch befinden sich im Ruß Anteile, die aus dem Gas gebildet werden und solche die aus der Flüssigkeit gebildet werden.

Als Meßzahl zur Kennzeichnung des Luftüberschusses wird häufig der sogenannte K-Faktor verwendet. Es handelt sich bei dem K-Faktor um das Verhältnis der für eine stöchiometriche Verbrennung des Brennstoffes benötigten Luftmenge zu der tatsächlich der Verbrennung zugeführten Luftmenge. Ein K-Faktor von 1 bedeutet also eine stöchiometrische Verbrennung. Bei Luftüberschuß ist der K-Faktor kleiner 1. Dabei können wie bei bekannten Rußen K-Faktoren zwischen 0,3 und 0,9 angewendet werden. Bevorzugt wird mit K-Faktoren zwischen 0,6 und 0,7 gearbeitet.

Als flüssiger Rußrohstoff können flüssige aliphatische oder aromatische, gesättigte oder ungesättigte Kohlenwasserstoffe oder Mischungen hiervon, Destillate aus dem Steinkohlenteer oder Rückstandsöle, die beim katalytischen Cracken von Erdölfraktionen beziehungsweise bei der Olefinherstellung durch Cracken von Naphtha oder Gasöl entstehen, eingesetzt werden.

Als gasförmiger Rußrohstoff können gasförmige aliphatische, gesättigte oder ungesättigte Kohlenwasserstoffe, Mischungen hiervon oder Erdgas eingesetzt werden.

Das beschriebene Verfahren ist nicht auf eine bestimmte Reaktorgeometrie beschränkt. Es kann vielmehr auf verschiedene Reaktortypen und Reaktorgrößen angepaßt werden. Als Rußrohstoff-Zerstäuber können sowohl reine Druckzerstäuber (Einstoffzerstäuber) als auch Zweistoffzerstäuber mit innerer oder äußerer Mischung eingesetzt werden, wobei als Zerstäubungsmedium der gasförmige Rußrohstoff verwendet werden kann. Die vorstehend beschriebene Kombination eines flüssigen mit einem gasförmigen Rußrohstoff kann also zum Beispiel durch Verwendung des gasförmigen Rußrohstoffs als Zerstäubungsmedium für den flüssigen Rußrohstoff realisiert werden.

Bevorzugt können zur Zerstäubung von flüssigem Rußrohstoff Zweistoffzerstäuber eingesetzt werden. Während bei Einstoffzerstäubern eine Änderung des Durchsatzes auch zu einer Änderung der Tröpfchengröße führt, kann die Tröpfchengröße bei Zweistoffzerstäubern weitgehend unabhängig vom Durchsatz beeinflußt werden.

Die CTAB-Oberfläche kann von 20 bis 200 m²/g, vorzugsweise von 20 bis 70 m²/g, betragen. Die DBP-Zahl kann von 40 bis 160 ml/100g, vorzugsweise 100 bis 140 ml/100g, betragen.

Als Ruß mit einem Wasserstoffgehalt > 4200 ppm, bestimmt durch CHN-Analytik, kann weiterhin ein Ruß eingesetzt werden, der aus der DE 19521565 bekannt ist.

Die Ruße können unbehandelt oder nachbehandelt eingesetzt werden. Der Ruß kann undotiert oder mit Fremdatomen dotiert sein. Fremdatome können sein Si, Zr, Sb, V, Fe, Mg oder Ti.

Der sehr hohe Wasserstoffgehalt ist ein Hinweis auf eine starke Störung des Kohlenstoffgitters durch erhöhte Zahl an Kanten der im Vergleich zu Vulcan XC-72 oder Acetylenrußen kleineren C-Kristallite. Der Wasserstoffanteil kann mittels Neutronenbeugung zweifelsfrei nachgewiesen werden und deutet auf die Existenz sp³-hybridisierter C-Atome, sog. Störstellen im Kristallitgitter an, auf denen Platin bevorzugt abgeschieden werden kann.

Für eine optimale Funktion der erfindungsgemäßen Elektrokatalysatoren kann die Beladung des Elektrokatalysators zwischen 5 und 80 Gew.-% Platin, bevorzugt zwischen 10 und 60 Gew.-% Platin relativ zum Gesamtgewicht des Elektrokatalysators betragen.

Die Atomverhältnisse zwischen Platin und den gegebenenfalls mehreren anderen Dotierungs- beziehungsweise Legierungskomponenten können zwischen 9:1 und 1:9, bevorzugt jedoch zwischen 5:1 und 1:5 liegen.

Im Falle von tri- oder multimetallischen Elektrokatalysatoren kann das Atomverhältnis der weiteren Legierungskomponenten untereinander in den Grenzen zwischen 10:0 und 0:10 variiert werden. Besonders vorteilhaft sind jedoch Atomverhältnisse in den Grenzen von 3:1 und 1:3.

Ein weiterer Gegenstand der Erfindung ist ein Verfahren zur Herstellung des erfindungsgemäßen Elektrokatalysators, dadurch gekennzeichnet, daß zu einer Suspension eines Rußes mit einem H-Gehalt > 4200 ppm, Edelmetallsalzlösung und gegebenenfalls Salzlösungen der Dotierungs- beziehungsweise Legierungselemente gleichzeitig, nacheinander oder in einem zweistufigen Verfahren nach vorheriger Herstellung eines Edelmetallvorkatalysators zugegeben wird, durch Verwendung einer basischen Verbindung die (Edel-) Metallsalzlösungen hydrolysiert werden und die vollständige Abscheidung des Edelmetalls beziehungsweise der anderen Metalle durch Reduktion mit einem Reduktionsmittel durchgeführt wird.

Die erfindungsgemäßen Elektrokatalysatoren können durch Suspendierung des Rußes in voll entsalztem Wasser, durch Hydrolyse beziehungsweise Fällung geeigneter Platinsalze, wie zum Beispiel Hexachloroplatin(IV)säure, Platinnitrat, Platinsulfitsäure oder Hexahydroxoplatin (IV) säure, sowie anschließende naßchemische Reduktion mit geeigneten Reduktionsmitteln, wie zum Beispiel Formaldehyd, Natriumborhydrid oder Hydrazin, erhalten werden.

Nach Abtrennung des Katalysators durch Filtration schließt sich ein Trocknungsschritt an.

Nach der naßchemischen Präparation des Elektrokatalysators kann eine Temperaturbehandlung unter Inertgas oder reduzierender Atmosphäre bei Temperaturen zwischen 0°C und 1000°C, vorzugsweise zwischen 100°C und 700°C, durchgeführt werden.

Der erfindungsgemäße Elektrokatalysator kann in Gasdiffusionselektroden für die Kathoden- oder Anodenseite einer Membran-Brennstoffzelle (zum Beispiel PEM FC, DMFC), enthaltend eine poröse Katalysatorschicht auf einem hydrophobierten leitfähigen Substratmaterial, eingesetzt werden. Die Gasdiffusionselektrode wird auf der Kathoden- und Anodenseite einer Membran-Elektroden-Einheit für PEM- oder DM-Brennstoffzellen, die eine Polymermembran und Gasdiffusionselektroden auf der Anoden- und Kathodenseite enthält, eingesetzt.

Der erfindungsgemäße Elektrokatalysator kann als katalytisch aktive Schicht auf der Kathoden- und Anodenseite einer mit Katalysator beschichteten, protonenleitenden Polymermembran für Membran-Brennstoffzellen eingesetzt werden.

Der erfindungsgemäße Elektrokatalysator kann als Katalysatorschicht auf der Kathoden- und Anodenseite einer Membran-Elektroden-Einheit für PEM-Brennstoffzellen, die eine protonenleitende Polymermembran und beidseitig auf Kathoden- und Anodenseite angebrachte Gasdiffusionselektroden enthält, eingesetzt werden.

Alle erfindungsgemäßen Elektrokatalysatoren zeichnet eine hohe Dispersion der auf dem Träger abgeschiedenen Metallpartikel sowie eine höhere Aktivität im elektrochemischen Vollzellentest gegenüber bekannten Elektrokatalysatoren aus.

### Beispiele

In den folgenden Beispielen und Vergleichsbeispielen werden erfindungsgemäße Elektrokatalysatoren und Vergleichselektrokatalysatoren hergestellt und bezüglich ihrer elektrochemischen Eigenschaften in der Anwendung für Brennstoffzellen miteinander verglichen.

Als Trägermaterial für den erfindungsgemäßen Elektrokatalysator wird der Ruß B1 der Firma Degussa-Hüls eingesetzt, für die Vergleichskatalysatoren der Furnace-Ruß Vulcan XC-72 der Firma Cabot Inc.

### Herstellung des Rußes B1:

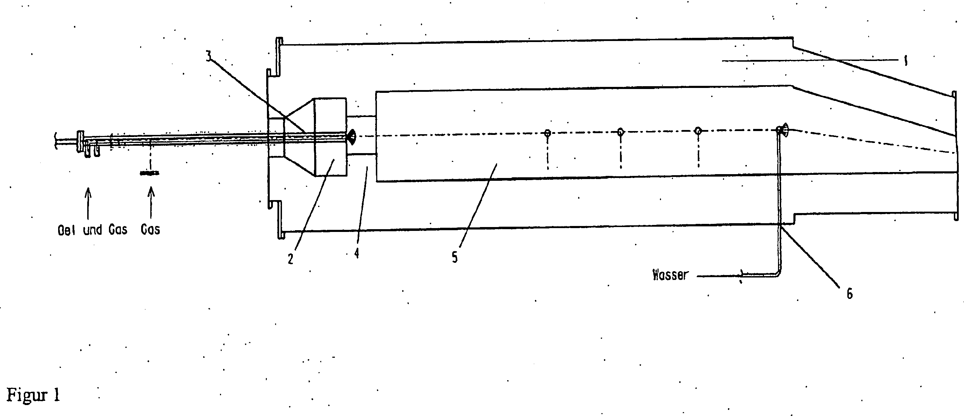

Der Ruß B1 wird in dem in Figur 1 dargestellten Rußreaktor 1, durch Eindüsen des flüssigen und gasförmigen Rußrohstoffes an derselben Stelle, hergestellt. Dieser Rußreaktor 1 besitzt eine Brennkammer 2. Das Öl und Gas wird über die axiale Lanze 3 in die Brennkammer eingeführt. Die Lanze kann zur Optimierung der Rußbildung in axialer Richtung verschoben werden.

Die Brennkammer läuft auf die Engstelle 4 zu. Nach Durchqueren der Engstelle expandiert das Reaktionsgasgemisch in die Reaktionskammer 5.

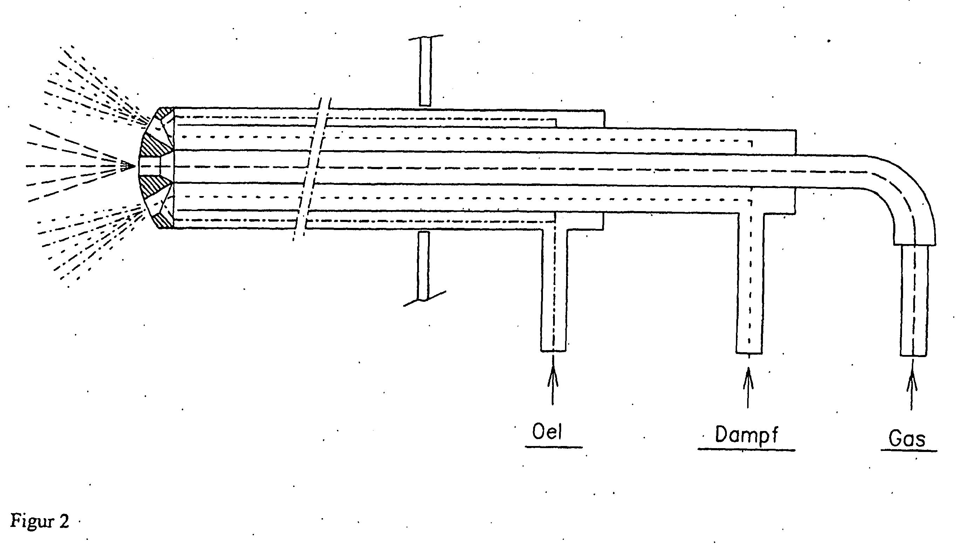

Die Lanze weist an ihrem Kopf geeignete Sprühdüsen auf (Figur 2).

Die für das Verfahren wichtige Verbrennungszone, Reaktionszone und Abbruchzone können nicht scharf voneinander getrennt werden. Ihre axiale Ausdehnung hängt von der jeweiligen Positionierung der Lanzen und der Quenchwasser-Lanze 6 ab.

Die Abmessungen des verwendeten Reaktors sind der folgenden Aufstellung zu entnehmen:

| | |
|---|---|
| Größter Durchmesser der Brennkammer: | 696 mm |
| Länge der Brennkammer bis Engstelle: | 630 mm |
| Durchmesser der Engstelle: | 140 mm |
| Länge der Engstelle: 230 | mm |
| Durchmesser der Reaktionskammer: | 802 mm |
| Position der Öllanzen ¹⁾ | + 160 mm |
| Position der Quenchwasserlanzen ¹⁾ 2060 | mm |

| | |
|---|---|
| ¹⁾ gemessen vom Nullpunkt (Beginn Engstelle) | |

Die Reaktorparameter für die Herstellung des erfindungsgemäßen Rußes sind in der folgenden Tabelle aufgeführt.

| **Reaktorparameter** | **Ruß** | |
|---|---|---|
| **Parameter** | **Einheit** | **B1** |
| Verbrennungsluft | Nm³/h | 1500 |
| Temperatur der Verbrennungsluft | °C | 550 |
| Σ Erdgas | Nm³/h | 156 |
| k-Faktor (gesamt) | | 0,70 |
| Rußöl, axial | kg/h | 670 |
| Rußöl-Stellung | mm | +16 |
| Zerstäuberdampf | kg/h | 100 |
| Additiv (K₂CO₃-Lösung) | 1/h x g/l | 5, 0 x 3,0 |
| Additiv Position | | axial |
| Reaktorausgang | °C | 749 |
| Quenchposition | mm | 8810 |

### Charakterisierung der Trägermaterialien:

Die Wasserstoffgehalte der beiden Ruße werden sowohl durch CHN-Elementanalytik als auch mittels Neutronenbeugung bestimmt. Die Methode der inelastischen Neutronenstreuung (INS) ist in der Literatur beschrieben (P. Albers, G. Prescher, K. Seibold, D. K. Ross and F. Fillaux, *Inelastic Neutron Scattering Study Of Proton Dynamics In Carbon Blacks*, Carbon 34 (1996) 903 und P. Albers, K. Seibold, G. Prescher, B. Freund, S. F. Parker, J. Tomkinson, D. K. Ross, F. Fillaux, *Neutron Spectroscopic Investigations On Different Grades Of Modified Furnace Blacks And Gas Blacks,* Carbon 37 (1999) 437).

Die Methode INS (beziehungsweise IINS - Inelastische, inkohärente Neutronenstreuung) bietet einige recht einmalige Vorteile für die noch intensivere Charakterisierung von Rußen und Aktivkohlen.

Ergänzend zur bewährten elementaranalytischen Quantifizierung des H-Gehaltes, erlaubt es die INS-Methode den zum Teil recht geringen Wasserstoffanteil in graphitisierten Rußen (ca. 100-250 ppm), Rußen (ca. 2000-4000 ppm in Furnacerußen) und in Aktivkohlen (ca. 5000-12000 ppm in typischen Katalysatorträgern) detaillierter hinsichtlich seiner Bindungszustände aufzuschlüsseln.

Zu Vergleichszwecken sind in der folgenden Tabelle die mittels CHN-Analytik (LECO RH-404-Analysator mit Wärmeleitfähigkeitsdetektor) bestimmten Werte des Gesamtwasserstoffgehaltes der Ruße aufgeführt. Zudem sind die auf das Probengewicht normierten Spektrenintegrale angegeben, die folgendermaßen bestimmt wurden: Integration des Bereiches eines INS-Spektrums von 500-3600 cm⁻¹. Hierdurch wird die Graphitschwingungsbande der Kohlenstoffmatrix bei ca. 110 cm⁻¹ ausgeblendet.

| **Ruß** | **H-Gehalt [ppm] durch CHN-Elementanalytik** | **H-Gehalt[Integral/ Probengewicht] durch INS** |
|---|---|---|
| B1 | 4580 ± 300 | 69.1 |
| Vulcan XC-72 Furnace-ruß | 2030 ± 200 | 46.5 |

Die spezifische BET-Oberfläche der Trägermaterialien wird gemäß DIN 66132 und ihre CTAB-Zahl gemäß ASTM D-3765 bestimmt.

| **Ruß** | **CTAB-Oberfläche** | **BET-Oberfläche** | **BET:CTAB-Oberflächenverhältnis** |
|---|---|---|---|
| | **[m**^{**2**}**/g]** | **[m**^{**2**}**/g]** | |
| B1 | 30 | 30 | 1 |
| Vulcan XC-72 Furnace-ruß | 170 | 250 | 1,47 |

### Beispiel 1

20,1 g Ruß B1 (Feuchte 0,5 Gew.-%) werden in 2000 ml voll entsalztem Wasser suspendiert. Nach Erhitzen auf 90 °C und Einstellen des pH-Wertes auf 9 mit Natriumhydrogencarbonat werden 5 g Platin in Form von Hexachloroplatin(IV)säureLösung (25 Gew.-% Pt) hinzugefügt, die Suspension erneut auf pH 9 eingestellt, mit 6,8 ml Formaldehydlösung (37 Gew.-%) reduziert, nach Filtration mit 2000 ml voll entsalztem Wasser gewaschen und bei 80 °C in Vakuum 16 h getrocknet. Der so erhaltene Elektrokatalysator weist einen Platingehalt von 20 Gew.-% auf.

### Vergleichsbeispiel 1

In Analogie zu Beispiel 1 werden 20,0 g Vulcan XC-72 R (bezogen auf Trockengewicht) der Firma Cabot in 2000 ml voll entsalztem Wasser suspendiert. Die Herstellung des Elektrokatalysators erfolgt in derselben Weise, wie in Beispiel 1 beschrieben. Man erhält nach Trocknung im Vakuum einen Elektrokatalysator, der einen Platin-Gehalt von 20 Gew.-% aufweist.

### Beispiel 2

Zu einer Suspension von 80,4 g Ruß B1 (Feuchte 0,5 Gew.-%) in 2000 ml vollentsalztem Wasser gibt man unter Rühren bei Raumtemperatur eine Lösung von 52,7 g Hexachloroplatin (IV) säure (25 Gew.-% Pt) und 48,4 g Ruthenium (III) chloridlösung (14 Gew.-% Ru) in 200 ml deionisiertem Wasser. Man erwärmt auf 80 °C und stellt mit Natronlauge einen pH-Wert von 8,5 ein. Nach Zugabe von 27,2 ml einer Formaldehydlösung (37 Gew.-%) wird abfiltriert, mit 2000 ml voll entsalztem Wasser nachgewaschen und der feuchte Filterkuchen bei 80 °C im Vakuumtrockenschrank getrocknet. Man erhält einen Elektrokatalysator, der 13,2 Gew.-% Platin und 6,8 Gew.-% Ruthenium enthält.

### Vergleichsbeispiel 2

In Analogie zu Beispiel 2 wird unter Verwendung von 81,1 g Vulcan XC-72 R (Feuchte 1,39 Gew.-%) als Katalysatorträger ein Platin-Ruthenium-Katalysator erhalten, der 13,2 Gew.-% Pt und 6,8 Gew.-% Ru enthält.

Die Synthese von Vergleichsbeispiel 2 ist in DE 197 21 437 unter Beispiel 1 beschrieben.

### Charakterisierung der Elektrokatalysatoren

Zur Bestimmung der Eigenschaften der Elektrokatalysatoren wird zunächst die Partikelgröße der Edelmetallkristallite mittels Röntgenbeugung (XRD) bestimmt.

Partikelgrößenbestimmung wurde jeweils am (110) Reflex des Platins bei 2 Theta = 40 ° vorgenommen.

| **Katalysator** | **Partikelgröße [nm]** | **Gitterkonstante [nm]** |
|---|---|---|
| **Beispiel 1** | **4,4** | **0,392** |
| **Vergleichsbeispiel 1** | **2,3** | **0,396** |
| **Beispiel 2** | **3,8** | **0,394** |
| **Vergleichsbeispiel 2** | **1,5** | **0,394** |

In Analogie zu den Beispielen 1 bis 3 der DE 197 21 437 ist bei dem bimetallischen Pt-Ru-Katalysator keine Verschiebung des Platinreflexes im XRD-Spektrum zu beobachten, der auf eine Legierungsbildung hinweist.

Zusätzlich zu den röntgenographischen Messungen werden INS-Spektren (inelastische, inkohärente Neutronenstreuung) aufgenommen, um den Wasserstoffanteil und die Bindungszustände des Kohlenstoffs im Katalysator zu bestimmen.

Die dabei angewendete Methode ist völlig analog zu den bei der Charakterisierung der Ruße verwendeten Verfahren. Es zeigt sich, daß die unterschiedlichen Eigenschaften der Ruße Vulcan XC-72 und B1 auch im Katalysator deutlich zu erkennen sind. Die auf Probengewicht normierten Spektrenintegrale des INS-Spektrums im ausgewählten Bereich von 750 - 2000 cm⁻¹ bestätigen dies. Durch den gewählten Integrationsbereich wird die Graphitschwingungsbande der Kohlenstoffmatrix bei 110 cm⁻¹ ausgeblendet.

Für den Materialvergleich sind neben der Graphitschwingungsbande bei 112 cm⁻¹ die folgenden Signale von Bedeutung:
- der Bereich von 750 - 1000 cm⁻¹ (d.h. bis zur scharfen Separation bei 1000 cm⁻¹); er entspricht den "out of plane" C-H-Deformationsschwingungsbanden an den Abbruchkanten der Netzebenen der graphitischen Rußbausteine
- der Bereich von 1000 - 1250 cm⁻¹; er entspricht den "in plane" C-H-Deformationsschwingungsbanden
- der Bereich 1250 - 2000 cm⁻¹; er entspricht den C-H-Deformationsschwingungen nicht-konjugierter Bestandteile.

| Spektrenbereich im INS | 750-1000 cm⁻¹ | 1000-1250 cm⁻¹ | 1250-2000 cm⁻¹ | Bereich A+B+C |
|---|---|---|---|---|
| | | | | normiert auf Probengewicht |
| Bereich | A | B | C | |
| Ruß B1 | 107 | 99 | 241 | 32.3 |
| Katalysator gemäß Beispiel 1 | 136 | 128 | 315 | 34.9 |
| Vulcan XC-72 Furnace-Ruß | 69 | 63 | 176 | 21.2 |
| Katalysator gemäß Vergleichsbeispiel 1 | 105 | 105 | 264 | 22.9 |

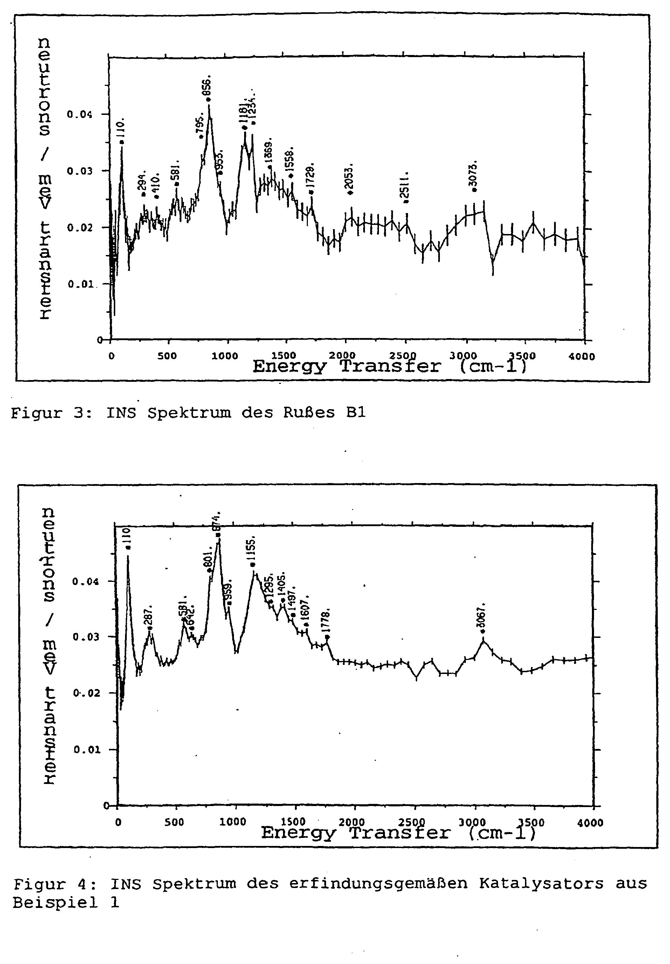

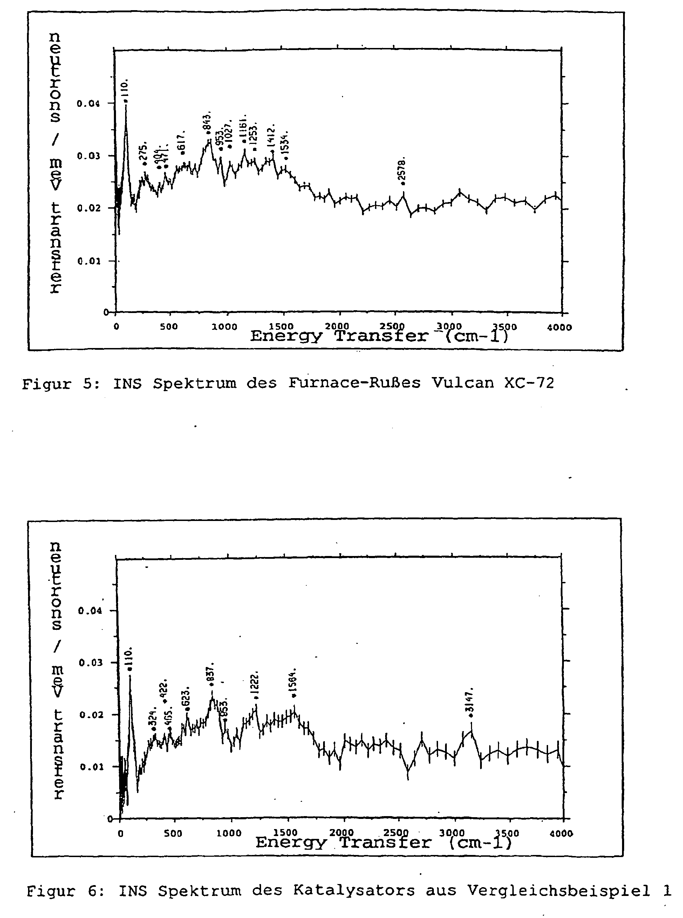

Figur 3 zeigt das INS-Spektren des Rußes B1, Figur 4 den gemäß Beispiel 1 hergestellten erfindungsgemäßen Katalysator. Figur 5 zeigt das INS-Spektrum des Vulcan XC-72 Furnace-Rußes, Figur 6 den gemäß Vergleichsbeispiel 1 hergestellten Katalysator.

Die Elektrokatalysatoren werden für die elektrochemische Charakterisierung zu einer Membran-Elektroden-Einheit (MEA = membrane electrode assembly) verarbeitet. Der erfindungsgemäße Elektrokatalysator gemäß Beispiel 1 sowie der Elektrokatalysator gemäß Vergleichsbeispiel 1 werden als Kathoden-Katalysatoren in Wasserstoff / Luft und Wasserstoff / Sauerstoffbetrieb charakterisiert. Der erfindungsgemäße Elektrokatalysator gemäß Beispiel 2 sowie der Elektrokatalysator gemäß Vergleichsbeispiel 2 werden als CO-tolerante Anoden-Katalysatoren im Reformat / Sauerstoffbetrieb getestet.

Die Kathoden- und Anoden-Katalysatoren werden gemäß Beispiel 1 der in US 5 861 222 beschriebenen Verfahrens auf eine ionenleitfähige Membran (Nafion 115) aufgebracht. Die so beschichtete Membran wird zwischen zwei leitfähig hydrophobierte Kohlepapiere (Firma TORAY, TGC 90) gelegt. Die Belegung der Kathoden- und Anodenseite beträgt jeweils 0,25 mg Platin/cm². Die so erhaltene Membran-Elektroden-Einheit (MEA) wird in einer PEM-Einzelzelle (Druckloser Betrieb, Temperatur 80°C) vermessen, wobei eine Stromdichte von 0,4 A/cm² eingestellt wird.

Zur elektrochemischen Testung der Kathoden-Katalysatoren werden beide Seiten der Membran mit einer Paste eines unter Beispiel 1 beziehungsweise Vergleichsbeispiel 1 beschriebenen Platinkatalysators beschichtet.

Als Brenngas auf der Kathode wird Sauerstoff beziehungsweise Luft, auf der Anode Wasserstoff verwendet.

| **Katalysator** | **Zell-Leistung bei 400 mA/cm**^{**2**} **[mV]** | | **Zell-Leistung bei 500 mA/cm**^{**2**} **[mV]** | |
|---|---|---|---|---|
| | **O**_{**2**} | **Luft** | **O**_{**2**} | **Luft** |
| Beispiel 1 | 687 | 606 | - 649 | 545 |
| Vergleichsbeispiel 1 | 630 | 518 | 576 | 429 |

Die Herstellung einer Membran-Elektrodeneinheit zur Testung des Anoden-Katalysators erfolgt in völliger Analogie zu dem für die Kathoden-Katalysatoren beschriebenen Verfahren gemäß US 5 861 222.

Dabei wird als Anoden-Katalysator ein nach Beispiel 2 beziehungsweise Vergleichsbeispiel 2 hergestellter geträgerter Pt-Ru-Katalysator verwendet. Auf der Kathodenseite wird in beiden Membran-Elektrodeneinheiten ein nach Vergleichsbeispiel 1 hergestellter Platinkatalysator verwendet.

Die Messung erfolgt in einer PEM-Einzelzelle (Druckbetrieb, bei 3 bar Temperatur 75°C), wobei eine Stromdichte von 0,5 A/cm² eingestellt wird.

Die Zellspannung U im Wasserstoff/Sauerstoff-Betrieb gilt als Maß für die Katalysatoraktivität.

Der Spannungsabfall ΔU, der nach der Zudosierung von 100 ppm CO zum Brenngas auftritt, wird als Maß für die CO-Toleranz des Katalysators herangezogen.

Folgende Brenngaszusammensetzung im Reformat / O₂-Betrieb wird verwendet: 58 Vol.-% H₂ 15 Vol.-% N₂, 24 Vol.-% CO₂, 100 ppm CO, 3 Vol.-% Luft ("Airbleed")

| **Katalysator** | **H**_{**2**}**/O**_{**2**}**-Betrieb: Zell-Leistung bei 500 mA/cm**^{**2**} | **Reformat/O**_{**2**}**-Betrieb: Zell-Leistung bei 500 mA/cm**^{**2**} | **ΔU CO-induzierter Spannungsabfall** |
|---|---|---|---|
| | **[mV]** | **[mV]** | **[mV]** |
| Beispiel 2 | 715 | 661 | - 54 |
| Vergleichsbeispiel 2 | 686 | 620 | - 66 |

Die Zell-Leistung ist für die Beispiele 1 und 2 deutlich erhöht gegenüber den jeweiligen Vergleichsbeispielen.

## Patentansprüche

1. Elektrokatalysator, enthaltend als Kohlenstoffträger einen Ruß mit einem H-Gehalt von > 4200 ppm, und als katalytisch aktive Komponente Platin oder bibeziehungsweise multimetallisch dotiertes oder legiertes Platin.

2. Elektrokatalysator nach Anspruch 1, **dadurch gekennzeichnet, daß** Platin mit Elementen aus der Reihe Ru, Sn, W, Mo, Fe, V, Mn, Co, Cr, Ni, Pd, Rh,Ir dotiert beziehungsweise legiert ist.

3. Elektrokatalysator nach Anspruch 2, **dadurch gekennzeichnet, daß** das Atomverhältnis zwischen Platin und den Dotierungs- beziehungsweise Legierungskomponenten zwischen 9:1 und 1:9 ist.

4. Elektrokatalysator nach Anspruch 1, **dadurch gekennzeichnet, daß** Platin in einer Menge zwischen 5 und 80 Gew.-%, relativ zum Gesamtgewicht des Katalysators, vorliegt.

5. Verfahren zur Herstellung eines Elektrokatalysators nach Anspruch 1, **dadurch gekennzeichnet, daß** zu einer Suspension eines Rußes mit einem H-Gehalt > 4200 ppm, Edelmetallsalzlösung und gegebenenfalls Salzlösungen der Dotierungs- beziehungsweise Legierungselemente gleichzeitig, nacheinander oder in einem zweistufigen Verfahren nach vorheriger Herstellung eines Edelmetallvorkatalysators zugegeben wird, durch Verwendung einer basischen Verbindung die (Edel-) Metallsalzlösungen hydrolysiert werden und die vollständige Abscheidung des Edelmetalls beziehungsweise der anderen Metalle durch Reduktion mit einem Reduktionsmittel durchgeführt wird.

6. Verfahren zur Herstellung eines Elektrokatalysators nach Anspruch 5, **dadurch gekennzeichnet, daß** nach naßchemischer Präparation des Elektrokatalysators eine Temperaturbehandlung unter Inertgas oder reduzierender Atmosphäre bei Temperaturen zwischen 0°C und 1000°C durchgeführt wird.

7. Gasdiffusionselektrode für die Kathoden- oder Anodenseite einer Membran-Brennstoffzelle, enthaltend eine poröse Katalysatorschicht auf einem hydrophobierten leitfähigen Substratmaterial, **dadurch gekennzeichnet, daß** sie den Elektrokatalysator nach Anspruch 1 enthält.

8. Mit Katalysator beschichtete, protonenleitende Polymermembran für Membran-Brennstoffzellen, **dadurch gekennzeichnet, daß** die katalytisch aktive Schicht auf der Kathoden- und Anodenseite den Elektrokatalysator nach Anspruch 1 enthält.

9. Membran-Elektroden-Einheit für Membran-Brennstoffzellen, die eine protonenleitende Polymermembran und beidseitig auf Kathoden- und Anodenseite angebrachte Gasdiffusionselektroden enthält, **dadurch gekennzeichnet, daß** die Katalysatorschicht auf der Kathoden- und Anodenseite den Elektrokatalysator gemäß Anspruch 1 enthält.

10. Membran-Elektroden-Einheit für Membran-Brennstoffzellen, die eine Polymermembran und Gasdiffusionselektroden auf der Anoden- und Kathodenseite enthält, **dadurch gekennzeichnet, daß** sie auf der Kathoden- und Anodenseite die Gasdiffusionselektrode nach Anspruch 7 aufweist.

## Claims

1. Electrocatalyst which comprises, as the carbon support, a carbon black with an H content of > 4200 ppm and, as the catalytically active component, platinum or bi- or multimetallically doped or alloyed platinum.

2. Electrocatalyst according to claim 1, **characterized in that** platinum is doped or alloyed with elements from the series comprising Ru, Sn, W, Mo, Fe, V, Mn, Co, Cr, Ni, Pd, Rh, Ir.

3. Electrocatalyst according to claim 2, **characterized in that** the atomic ratio between platinum and the doping or alloying components is between 9:1 and 1:9.

4. Electrocatalyst according to claim 1, **characterized in that** platinum is present in an amount of between 5 and 80 wt.%, relative to the total weight of the catalyst.

5. Process for the preparation of an electrocatalyst according to claim 1, **characterized in that** noble metal salt solution and optionally salt solutions of the doping or alloying elements are added simultaneously, in succession or in a two-stage process after prior preparation of a noble metal pre-catalyst to a suspension of a carbon black with an H content of > 4200 ppm, the (noble) metal salt solutions are hydrolysed using a basic compound and complete deposition of the noble metal and the other metals is carried out by reduction with a reducing agent.

6. Process for the preparation of an electrocatalyst according to claim 5, **characterized in that** after preparation of the electrocatalyst by a wet chemistry method, a heat treatment is carried out under an inert gas or reducing atmosphere at temperatures between 0ºC and 1000ºC.

7. Gas diffusion electrode for the cathode or anode side of a membrane fuel cell, comprising a porous catalyst layer on a hydrophobized conductive substrate material, **characterized in that** it comprises the electrocatalyst according to claim 1.

8. Catalyst-coated proton-conducting polymer membrane for membrane fuel cells, **characterized in that** the catalytically active layer on the cathode and anode side comprises the electrocatalyst according to claim 1.

9. Membrane electrode assembly for membrane fuel cells which comprises a proton-conducting polymer membrane and gas diffusion electrodes which are located on both sides on the cathode and anode side, **characterized in that** the catalyst layer on the cathode and anode side comprises the electrocatalyst according to claim 1.

10. Membrane electrode assembly for membrane fuel cells which comprises a polymer membrane and gas diffusion electrodes on the anode and cathode side, **characterized in that** it comprises the gas diffusion electrode according to claim 7 on the cathode and anode side.

## Revendications

1. Catalyseur électrique contenant, comme support carbone, un noir de carbone ayant une teneur en H > 4200 ppm et, comme composant à action catalytique, du platine ou du platine dopé ou allié avec deux ou plusieurs métaux.

2. Catalyseur électrique selon la revendication 1,
**caractérisé en ce que**
le platine est dopé respectivement allié avec des éléments de la série Ru, Sn, W, Mo, Fe, V, Mn, Co, Cr, Ni, Pd, Rh, Ir.

3. Catalyseur électrique selon la revendication 2,
**caractérisé en ce que**
le rapport atomique entre le platine et les composants de dopage respectivement d'alliage est compris entre 9:1 et 1:9.

4. Catalyseur électrique selon la revendication 1,
**caractérisé en ce que**
le platine est présent en quantité comprise entre 5 et 80 % en poids, par rapport au poids total du catalyseur.

5. Procédé de préparation d'un catalyseur électrique selon la revendication 1,
**caractérisé en ce qu'**
on ajoute à une suspension d'un noir de carbone ayant une teneur en H > 4200 ppm, une solution saline de métal précieux et, le cas échéant, des solutions salines des éléments de dopage ou d'alliage, en même temps, consécutivement, ou dans un procédé à deux étapes après avoir préparé préalablement un pré-catalyseur à base de métal précieux, on hydrolyse les solutions salines de métal (précieux) avec un composé basique et on effectue le dépôt complet du métal précieux ou des autres métaux par réduction avec un agent de réduction.

6. Procédé de préparation d'un catalyseur électrique selon la revendication 5,
**caractérisé en ce qu'**
après avoir préparé le catalyseur électrique par voie chimique humide, on procède à un traitement thermique sous gaz inerte ou atmosphère réductrice à des températures comprises entre 0°C et 1000°C.

7. Electrode de diffusion de gaz pour le côté cathode ou le côté anode d'une pile à combustible à membrane, contenant une couche de catalyseur poreuse sur un substrat hydrophobé conducteur,
**caractérisé en ce qu'**
elle contient un catalyseur électrique selon la revendication 1.

8. Membrane polymère recouverte de catalyseur, conduisant les protons, pour des piles à combustible à membrane,
**caractérisé en ce que**
la couche à action catalytique contient un catalyseur électrique selon la revendication 1 sur le côté cathode et le côté anode.

9. Unité membrane-électrode pour des piles à combustible à membrane comprenant une membrane polymère conduisant les protons et des électrodes de diffusion de gaz disposées des deux côtés cathode et anode,
**caractérisée en ce que**
la couche de catalyseur contient le catalyseur électrique selon la revendication 1 sur le côté cathode et le côté anode.

10. Unité membrane-électrode pour piles à combustible à membrane comprenant une membrane polymère et des électrodes de diffusion de gaz sur le côté anode et sur le côté cathode,
**caractérisée en ce qu'**
elle présente l'électrode de diffusion de gaz selon la revendication 7 sur le côté cathode et sur le côté anode.
